# EUROPÄISCHE PATENTSCHRIFT

(11) **EP 0 890 559 B1**
(45) Veröffentlichungstag und Bekanntmachung des Hinweises auf die Patenterteilung: **05.12.2001**
(21) Anmeldenummer: 98111721.1
(22) Anmeldetag: 25.06.1998
(51) Int. Cl.: C04B 35/80, C04B 35/624, C04B 41/87, D01F 11/00

(54) **Verfahren zur Beschichtung oxidischer Fasermaterialien mit Metallaluminaten zur Herstellung versagenstoleranter hochtemperaturfester oxidationsbeständiger Verbundwerkstoffe**
Process for coating of oxide fibers with metal aluminates for the manufacture of composites having failure tolerance and high temperature and oxidation resistance
Procédé de revêtement de fibres d'oxydes par des aluminates métalliques pour la fabrication de matériaux composites à tolérance à la rupture et résistants à une haute température et à l'oxydation

(30) Priorität: 11.07.1997 DE 19729830
(43) Veröffentlichungstag der Anmeldung: 13.01.1999
(73) Patentinhaber: Deutsches Zentrum für Luft- und Raumfahrt e.V., 51147 Köln (DE)
(72) Erfinder: Saruhan-Brings, Bilge, Dr., 53844 Troisdorf (DE); Mayer, Lutz, Dr., 47055 Duisburg (DE); Schneider, Hartmut, Prof.Dr., 53359 Rheinbach (DE)
(74) Vertreter: Jönsson, Hans-Peter, Dr.Dipl.-Chem.

(56) Entgegenhaltungen:
- CINIBULK M K ET AL: "Textured magnetoplumbite fiber-matrix interphase derived from sol-gel fiber coatings" J AM CERAM SOC;JOURNAL OF THE AMERICAN CERAMIC SOCIETY MAY 1996 AMERICAN CERAMIC SOC, WESTERVILLE, OH, USA, Bd. 79, Nr. 5, Mai 1996, Seiten 1233-1246, XP002080276
- CINIBULK MICHAEL K: "Synthesis and characterization of sol-gel derived lanthanum hexaluminate powders and films" J MATER RES;JOURNAL OF MATERIALS RESEARCH JAN 1995 MATERIALS RESEARCH SOCIETY, PITTSBURGH, PA, USA, Bd. 10, Nr. 1, Januar 1995, Seiten 71-76, XP002080277
- BROWN PETER W: "Metalorganic chemical vapor deposition of LaAl11O18 by a liquid precursor route" PROCEEDINGS OF THE 19TH ANNUAL CONFERENCE AND EXPOSITION ON COMPOSITES, ADVANCED CERAMICS, MATERIALS, AND STRUCTURES-A. PART A;COCOA BEACH, FL, USA JAN 8-12 1995, Bd. 16, Nr. 4, 8. Januar 1995, Seiten 385-387, XP002080278 Ceram Eng Sci Proc;Ceramic Engineering and Science Proceedings Jul-Aug 1995 American Ceramic Soc, Westerville, OH, USA
- CHIU HSING-PANG ET AL: "Study of fiber coating in Al2O3 fiber-reinforced NiAlFe matrix composites" MATER SCI ENG A STRUCT MATER PROP MICROSTRUCT PROCESS;MATERIALS SCIENCE & ENGINEERING A: STRUCTURAL MATERIALS: PROPERTIES, MICROSTRUCTURE AND PROCESSING NOV 15 1995 ELSEVIER SCIENCE S.A., LAUSANNE, SWITZERLAND, Bd. A203, Nr. 1-2, 15. November 1995, Seiten 81-92, XP002080279
- PESHEV P ET AL: "Preparation of lanthanum aluminate thin films by a sol-gel procedure using alkoxide precursors" MATER RES BULL;MATERIALS RESEARCH BULLETIN MAR 1994 PUBL BY PERGAMON PRESS INC, TARRYTOWN, NY, USA, Bd. 29, Nr. 3, März 1994, Seiten 255-261, XP002080280

## Beschreibung

Gegenstand der Erfindung ist ein Verfahren zur Beschichtung hochtemperaturfester Fasermaterialien mit Metallaluminaten, insbesondere eine oxidische Beschichtung hochtemperaturfester Fasern zur Herstellung versagenstoleranter oxidationsbeständiger Verbundwerkstoffe.

Weltweit besteht ein wachsendes Interesse an der Entwicklung von hochtemperaturstabilen, oxidationsbeständigen und versagenstoleranten, keramischen Materialien. Ein zentrales Anliegen ist dabei die Herstellung von Schindeln für den thermischen Schutz von Brennkammern in Flugzeugtriebwerken und in energieerzeugenden stationären Gasturbinen. Durch den Einsatz solcher keramischer Systeme wird der Wirkungsgrad der Verbrennung in der Brennkammer erhöht und gleichzeitig die Schadstoffemission vermindert. Andere Einsatzgebiete dieser Werkstoffe sind Heiße Strukturen und thermische Schutzsysteme (Thermal Protection Systems = TPS) für Wiedereintritts-Raumfahrzeuge.

Im Vordergrund der Untersuchungen standen zunächst Kohlenstoff- oder SiC-langfaserverstärkte Kohlenstoff-, SiC- und Si₃N₄-Matrixverbunde. Diese Verbundwerkstoffe weisen günstige mechanische Eigenschaften bei Raumtemperatur und bei hohen Temperaturen auf. Allerdings ist ihre Oxidationsbeständigkeit meist gering, speziell bei hohen Temperaturen. Deshalb werden in jüngster Zeit zunehmend keramische oxidfaserverstärkte Oxidmatrix-Verbundsysteme entwickelt. Von besonderem Interesse dabei sind Werkstoffe mit α-Al₂O₃- und Mullit-Matrix, die mit α-Al₂O₃-, Mullit- oder YAG-Fasern verstärkt sind.

Bisherige Untersuchungen haben gezeigt, daß die Oxidfasern häufig intensiv in die oxidkeramische Matrix eingebunden sind: Dies führt in der Regel dazu, daß das geforderte versagenstolerante Verhalten des Verbundwerkstoffs durch Faser-Pull-Out oder Rißablenkung entlang der Faser-Matrix-Grenze verhindert wird. Der Entwicklung einer geeigneten Grenzschicht zwischen Faser und Matrix durch Faserbeschichtung kommt somit eine wichtige Bedeutung zu. Die schichtförmig aufgebauten, nichtoxidischen "Low Toughness" C- und BN-Grenzschichten besitzen Graphitstruktur, wodurch Rißablenkung und Gleitvorgänge parallel zur jeweiligen kristallographischen (0001)-Ebene ermöglicht werden. Der dadurch induzierte Rißenergiebau bewirkt ein nahezu ideales quasiplastisches Verformungsverhalten. Der Einsatz von C und BN als Grenzschichten wird allerdings stark durch die extrem geringe Oxidationsbeständigkeit eingeschränkt. Die bisher in der Literatur diskutierten oxidischen Beschichtungssysteme wie LaPO₄, ZrO₂ oder MgO Al₂O₃ besitzen neben ihrer thermischen Stabilität unter oxidierenden Bedingungen auch nachteilige Eigenschaften: Die für oxidische Systeme charakteristischen hohen lonenbindungsanteile und die korrelierten hohen Diffusionskoeffizienten führen häufig zur Rekristallisation, Kornvergröberung durch Kristallwachstum, und vor allem zu Reaktionen mit koexistierenden Verbundkomponenten. Dadurch wird die Versagenstoleranz erniedrigt.

Gegenüber der nichtoxidischen Low Toughness- und den bisher bekannten oxidischen Grenzschichten haben Lanthanidaluminat-Materialien wesentliche Vorteile, da die Oxidationsbeständigkeit dieser Komponenten gegenüber C und BN wesentlich erhöht ist. Andererseits zeigen diese Beschichtungsmaterialien weder Rekristallisation noch Reaktionen mit der Faser.

Peter W. Brown, Ceram. Eng. Sci. Proc. 16 (4) 385 bis 387 (1995) beschreibt die metallorganische Abscheidung von LaAl₁₁O₁₈ auf der Basis eines flüssigen Vorläufers. Die Abscheidung aus der Dampfphase ist jedoch außerordentlich kostenaufwendig.

Die Druckschrift CINIBULK M K ET AL: "Textured magnetoplumbite fiber-matrix interphase derived from sol-gel fiber coatings" J AM CERAM SOC:JOURNAL OF THE AMERICAN CERAMIC SOCIETY MAY 1996 AMERICAN CERAMIC SOC. WESTERVILLE. OH. USA, Bd. 79, Nr. 5, Mai 1996, Seiten 1233-1246 beschreibt ein "Sol-Gel fiber coating" - Verfahren, wonach ein Sol enthaltend Aluminium-Oxid und Kalziumacetat auf Al-Oxid Fasern in einer Vorrichtung aufgetragen wird, wobei die Fasern zuerst auf 1100°C dann auf 1450°C erhitzt werden.

D.B. Gundel et al. (Journal of Materials, Sci. 29) S. 1795 bis 1800 (1994) beschreiben die Beschichtung von Substraten, beispielsweise Fasern eines Durchmessers von mehr als 150 µm mit Hilfe der Sol-Gel-Technik. Eine Beschichtung von Fasern mit einem Durchmesser von weniger als 150 µm ist im Stand der Technik nicht beschrieben und nach dem Stand der Literatur bislang auch nicht erwähnt worden. Ein Sol ist bekanntermaßen eine kolloidale Lösung, in der ein fester oder flüssiger Stoff in feinster Verteilung in einem festen, flüssigen oder gasförmigen Medium dispergiert ist. Durch Koagulation geht ein Sol in ein Gel über.

Die Aufgabe der vorliegenden Erfindung bestand darin, die Beschichtung von Fasermaterial, insbesondere zur Herstellung in versagenstoleranter, hochtemperaturfester, oxidationsbeständiger Verbundwerkstoffe auf der Basis von Oxidfaser-verstärkten Oxidmatrix-Verbundwerkstoffen zu verbessern.

Die vorgenannte Aufgabe wird erfindungsgemäß in einer ersten Ausführungsform gelöst durch ein Verfahren gemäß Anspruch 1.

Mit Hilfe der vorliegenden Erfindung wurde ein Verfahren zur Beschichtung hochtemperaturfester Fasermaterialien mit Metallaluminaten entwickelt, wodurch versagenstolerante, hochtemperaturfeste und oxidationsbeständige Verbundwerkstoffe, insbesondere auf der Basis von Oxidfaser-verstärkten Oxidmatrix-Verbundwerkstoffen erhältlich sind.

Die einzusetzenden Fasermaterialien sollen vorzugsweise ausgewählt sein aus Filamenten, Fasern, Endlosfasern, Faserbündeln, Vliesen, Gewirken und/oder Geweben. Besonders bevorzugt im Sinne der vorliegenden Erfindung ist es, Fasern in Endlosbündeln auf Basis oxidischer Materialien (Mullit, α-Al₂O₃, YAG, ZrO₂, Mullit/α-Al₂O₃, etc.) zu beschichten, insbesondere wenn diese einen Durchmesser von 5 bis 150 µm, vorzugsweise 5 bis 15 µm haben.

Zu diesem Zweck wurde eigens eine Vorrichtung entwickelt, die eine Beschichtung und anschließende Aufwicklung der beschichteten Endlosfaserbündel erlaubt. Ausgangsmaterial sind vorzugsweise kommerziell erhältliche Nextel® 720 Endlosfaserbündel der Firma 3M, die in einem Arbeitsgang vorbehandelt (Entfernung der organischen Hilfsmittel in einer kleinen Reaktionszone bei 950°C), beschichtet, vorgetrocknet und schließlich erneut aufgewickelt werden. Besonders vorzuheben ist, daß das Endlosfaserbündel vor und während des Passierens des Beschichtungssols derart geführt wird, daß eine Aufspreizung des Bündels in die einzelnen Endlosfasern erreicht wird, die dann parallel liegend durch das Sol gezogen und daran anschließend wieder zum Bündel vereinigt werden. Dieses Verfahren ist mit der Beschichtung von einzelnen Fasern gleichzusetzen und beinhaltet somit die gleichen vorteilhaften Eigenschaften.

Zwar ist es möglich im Sinne der vorliegenden Erfindung Faserbündel, Vliese, Gewirke oder Gewebe zu beschichten, dennoch wird der Beschichtung von einzelnen Fasern den Vorzug gegeben, da hierdurch eine größere Oberfläche mit der Beschichtung versehen wird, als wenn Faserbündel, Vliese, Gewirke oder Gewebe beschichtet werden.

Metalle, die im Sinne der vorliegenden Erfindung in Form von Verbindungen eingesetzt werden können, umfassen prinzipiell alle Metalle der III., IV., V. und VI. Nebengruppe des Periodensystems mit den obengenannten Ausnahmen; insbesondere bei den Lanthaniden sind Lanthan und Cer besonders bevorzugt.

Bei den Metallverbindungen ist die Auswahl außerordentlich vielfältig. Besonders bevorzugt im Sinne der vorliegenden Erfindung sind die Metallverbindungen, ausgewählt aus den Nitraten, Acetaten, Oxalaten und/oder Acetylacetonaten. In gleicher Weise sind auch Aluminiumverbindungen bevorzugterweise ausgewählt aus den Nitraten, Alkoholaten, Oxalaten und Acetylacetonaten. Mit den genannten Materialien ist in außerordentlich einfacher Weise möglich, Sole herzustellen, die durch Temperaturerhöhung zu Gelen koagulieren.

Bei Auswahl der Verbindungen mit den genannten bevorzugten Anionen ist es möglich, das Fasermaterial im Vakuum unter Kristallwasserabscheidung, Nitratabscheidung, Kristallwasserverdampfung, Nitratverdampfung sowie durch Oxidation der organischen Reste unter Abscheidung oder Verdampfung von Kohlenwasserstoffen oder Kohlenoxiden zu schmelzimprägnieren. Bei Temperaturen im Bereich von bis 300 °C verdampfen die Kristallwasseranteile oder die Nitratanteile, so daß oberhalb dieser Temperatur nur noch oxidische Bestandteile vorhanden sind.

Die Temperaturbehandlung im Bereich von mehr als 600 °C umfaßt auch die Verwendung der Fasermaterialien in oxidationsbeständigen Verbundwerkstoffen, insbesondere in einer Matrix aus Mullit oder Aluminiumoxid. Besonders bevorzugt im Sinne der vorliegenden Erfindung werden die Fasermaterialien, beispielsweise Gewebe unter Heißpreßbedingungen, beispielsweise bei Temperaturen oberhalb der Sinterstarttemperatur bei Preß-Drücken von mehreren MPa im Verlauf von wenigen Minuten gesintert.

Vorzugsweise werden im Rahmen der vorliegenden Erfindung Fasern polykristalliner Natur eingesetzt, die auf dem chemischen System als Al₂O₃-SiO₂ beruhen. Sie weisen daher für die erfindungsgemäß beschriebenen Verbundwerkstoffe, neben einer ausreichend hohen Festigkeit, ähnliche thermomechanische Eigenschaften wie die mullitische Matrix auf. Die hier beschriebene Faserbeschichtung verhindert Reaktionen zwischen Fasem und Matrix. Daraus resultiert eine schwache mechanische Bindung zwischen Fasern und Matrix, die energieverzehrende Mechanismen wie Rißablenkung und Faser-Pull-Out und eine daran gekoppelte erhöhte Versagenstoleranz ermöglicht.

In den Fign werden die erfindungsgemäßen Fasern dargestellt und darüber hinaus in einer Gegenüberstellung das unterschiedliche Bruchverhalten von Verbundmaterialien, bestehend aus einer Mullit-Matrix und unbeschichteten und/oder beschichteten im Handel erhältlichen Nextel® 720-Fasern gegenübergestellt.

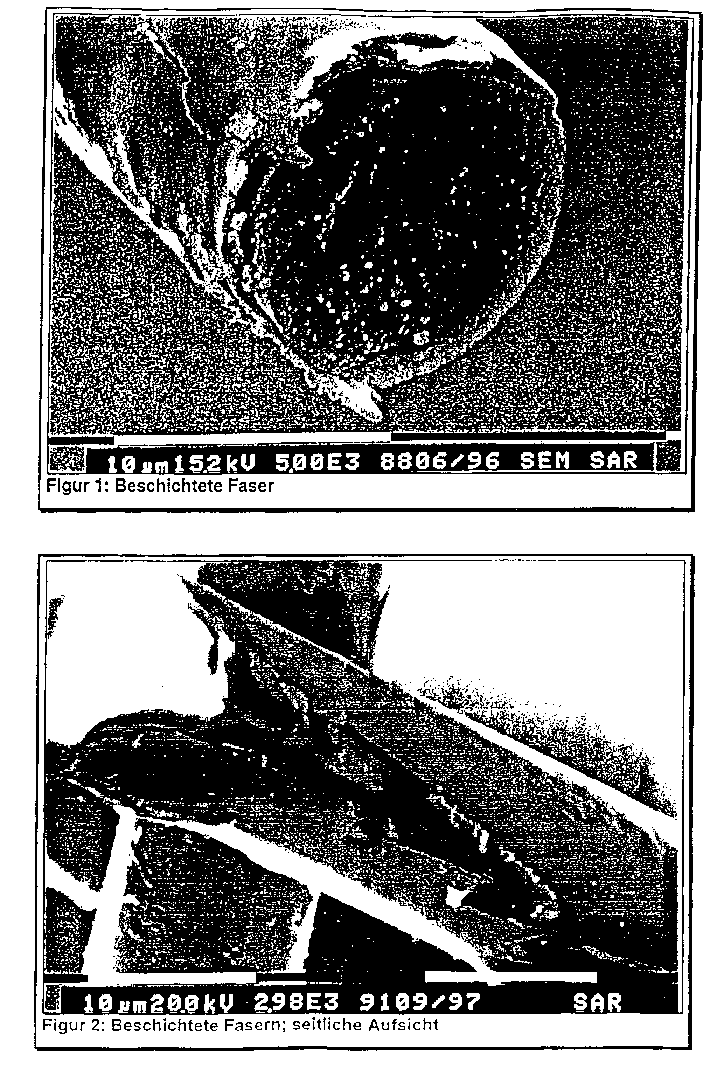

Die Fig. 1 zeigt die 5000fache Vergrößerung einer beschichteten Faser nach drucklosem Brennen bei 1200 °C über einen Zeitraum von 2 Stunden. Deutlich ist, neben der guten Belegung der Faser durch das Beschichtungsmaterial Lanthanaluminat (β-Aluminat-Struktur) auch die geforderte schwache Anbindung der Beschichtung an die Faser zu erkennen, die die spätere Versagenstoleranz im Verbundwerkstoff gewährleistet.

Die Fig. 2 zeigt eine seitliche Aufsicht der beschichteten Fasern. Die hier gezeigte, gezielte mechanische Schädigung betrifft ausschließlich die Beschichtung und zieht nicht die Faser in Mitleidenschaft. Dieser Effekt resultiert aus der schwachen Anbindung des Beschichtungsmaterials an die Faser.

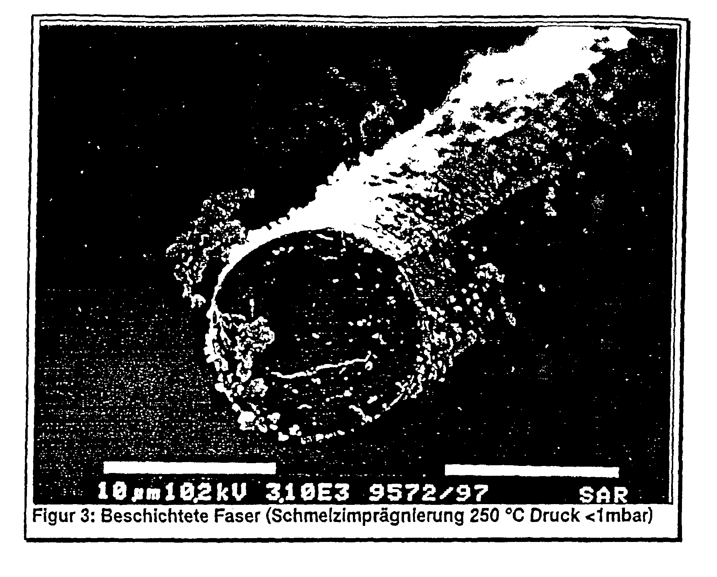

Die Fig. 3 zeigt eine beschichtete Faser, die aus einer Gewebematte nach der Schmelzimprägnierung bei 250 °C im Vakuum präpariert wurde. Das Material ist nach dem erfindungsgemäßen Verfahren hergestellt worden.

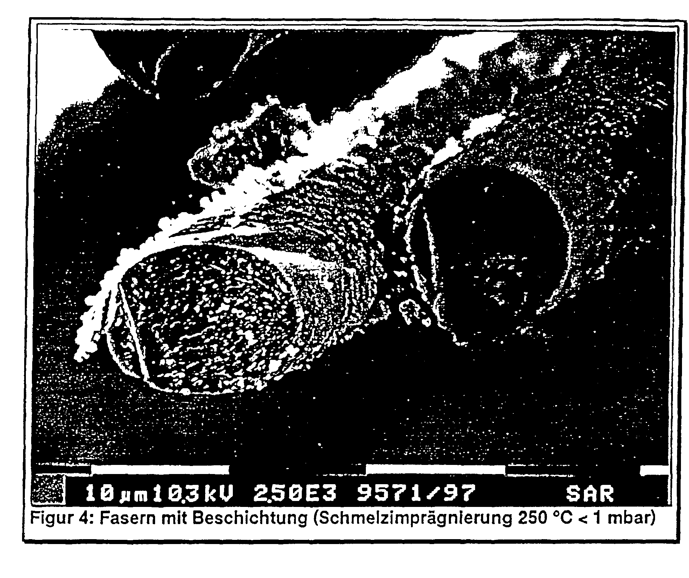

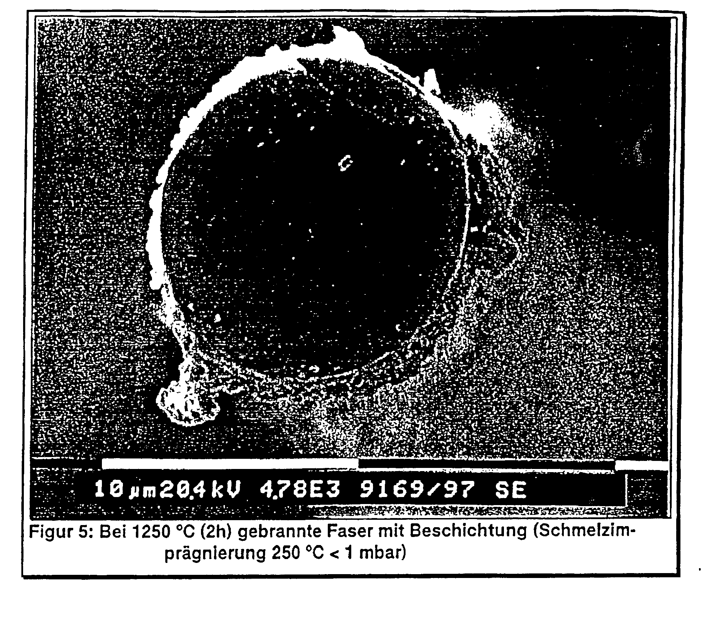

In den Fign 4 und 5 sind weitere Beispiele beschichteter Fasern vor und nach dem Brennen bei 1200 °C zu sehen, die aus Fasergeweben isoliert wurden.

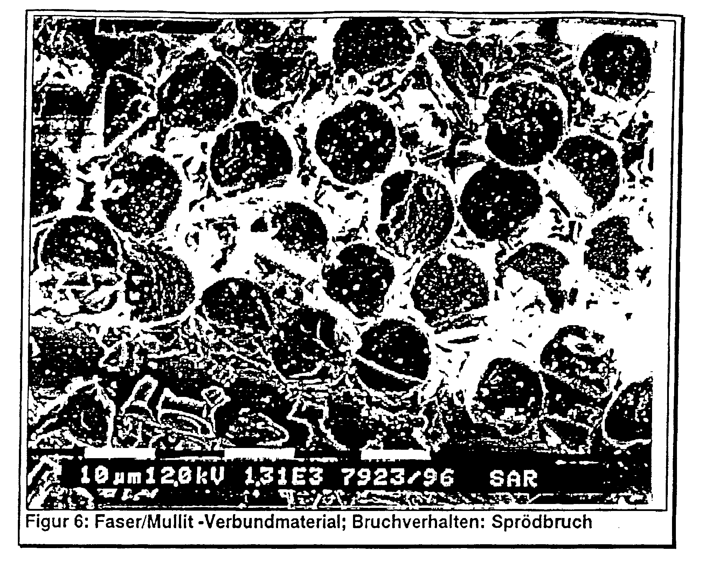

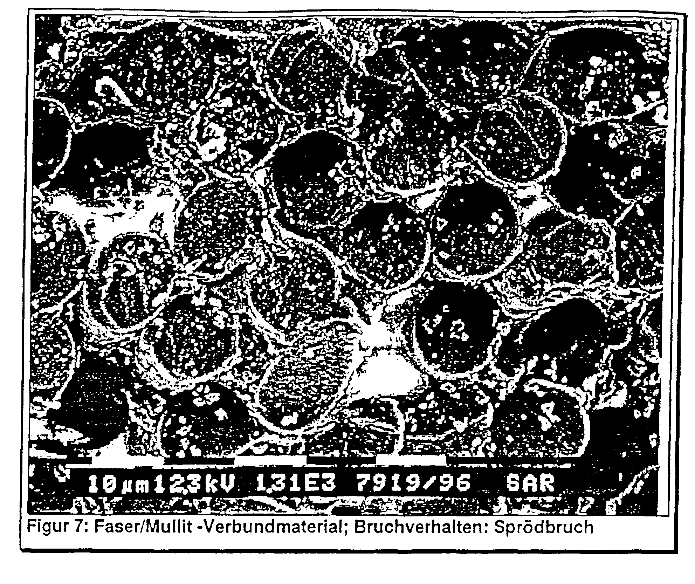

In den Fign 6 und 7 wird die Bruchfläche von verschiedenen Verbundmaterialien wiedergegeben. So zeigen diese Fign das Sprödbruchverhalten eines Verbundmaterials ohne Grenzschicht, bestehend aus Nextel® 720-Fasern und einer Mullit-Matrix. Die Heißpreßbedingungen sind mit denen der erfindungsgemäßen Verbundmaterialien identisch, so daß ein direkter Vergleich uneingeschränkt möglich ist.

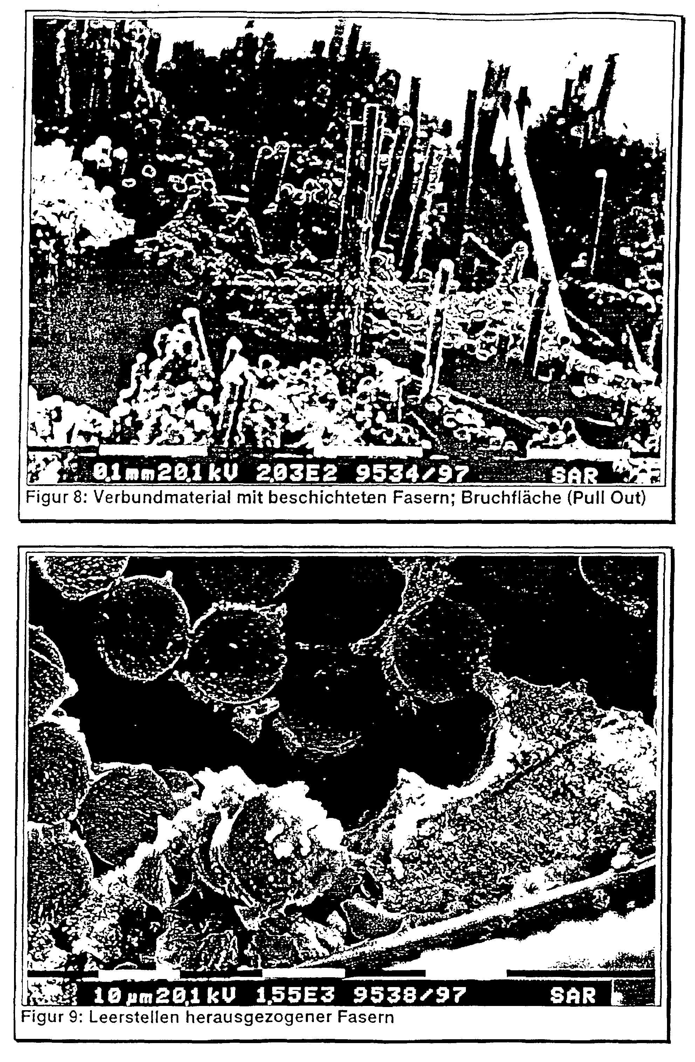

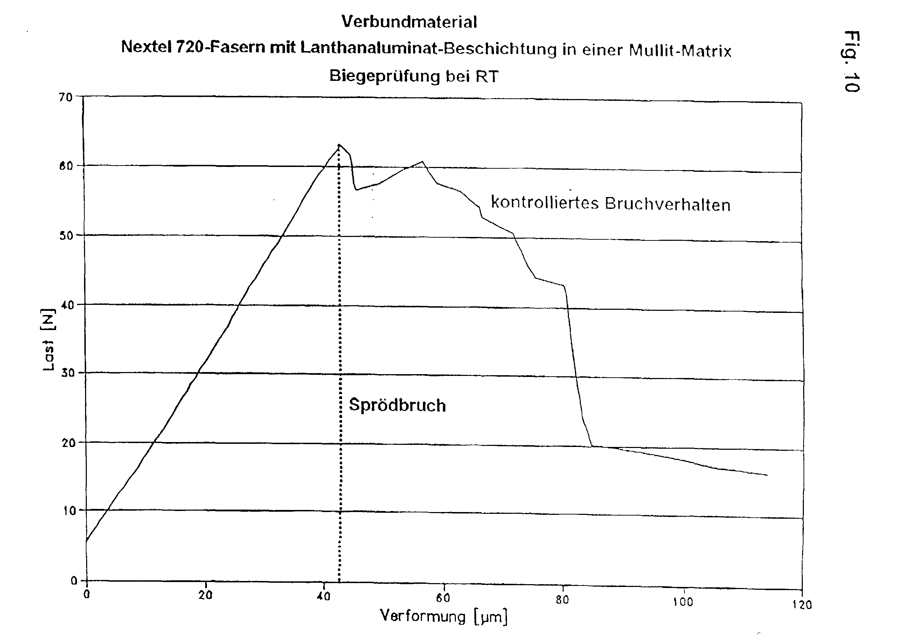

Die Fign 8 und 9 zeigen die Bruchfläche des erfindungsgemäßen Verbundmaterials. Deutlich ist hier das veränderte Bruchverhalten anhand des sogenannten "Pull-Out" zu erkennen. Einzelne Fasern werden während der Belastung des Verbundmaterials aus ihren Ursprungspositionen - siehe Fig. 9 - herausgezogen. Die Folge ist ein Abbau der Belastungsenergie, gleichbedeutend mit der Vermeidung eines katastrophalen Versagens des Werkstoffes (Sprödbruch). Wie die Fign 6 und 7 zeigen, ist das Sprödbruchverhalten durch einen glatten Bruch sowohl durch Matrix als auch durch Fasern gekennzeichnet. Bei Erreichung der maximalen Belastung tritt sofort ein totales Versagen ein. Die erfindungsgemäßen Materialien zeigen hingegen Versagenstoleranz, in dem der Bruch kontrolliert erfolgt, wodurch ein katastrophales Versagen unterbunden wird.

Die Fig. 10 gibt die graphische Auswertung von Biegebruchversuchen für den charakteristischen Bruchverlauf der erfindungsgemäßen Verbundmaterialien wieder. Zum Vergleich ist die ansonsten typische Kurve für Verbundmaterialien ohne beschichtete Fasern eingetragen, die ein Sprödbruchverhalten repräsentiert.

### Ausführungsbeispiele:

### Beispiel 1: LaAl₁₁O₁₈

100 mL einer 2,66 molaren Lösung von Aluminiumnitrat-Nonahydrat in absolutem Ethanol (M = 2,66 mol/L) wurden mit 3,70 mL 2,4-Pentandion (13,5 mol.-% bezogen auf den Aluminiumgehalt) versetzt und das Reaktionsgemisch 30 min lang gerührt. Anschließend wurden 52,5 mL einer 0,462 molaren Lösung von Lanthannitrat-Hexahydrat in absolutem Ethanol (M = 0,462 mol/L) unter ständigem intensivem Rühren hinzugegeben und das Reaktionsgemisch über einen Zeitraum von 10 bis 30 min auf 40 °C temperiert. Erhalten wurde ein leicht viskoses Sol, das direkt zur Benetzung des Fasermaterials eingesetzt wird.

### Beispiel 2:

Analog Beispiel 1 wurde ein entsprechendes Sol hergestellt, jedoch die Menge an 2,4-Pentandion auf 1 mol.-% festgelegt.

### Beispiel 3:

Analog Beispiel 1 wurde ein entsprechendes Sol hergestellt, jedoch die Menge an 2,4-Pentandion auf 10 mol.-% festgelegt.

### Beispiel 4:

Analog Beispiel 1 wurde ein entsprechendes Sol hergestellt, jedoch die Menge an 2,4-Pentandion auf 15 mol.-% festgelegt.

### Beispiel 5:

### Herstellung des versagenstoleranten faserverstärkten Verbundwerkstoffes

Ein handelsübliches Fasergewebe Nextel® 720 mit einem Filamentdurchmesser von etwa 12 µm, das eine kristalline Faser aus α-Aluminiumoxid und Mullit enthält, wurde wie folgt beschichtet. Zur Vorbereitung der Gewebe wurde die Gewebematte zunächst auf 700 °C an der Luft erwärmt, um die Herstellungsbedingte Menge an organischen Hilfsmitteln in Höhe von etwa 2 Gew.-% zu entfernen.

Das gereinigte Fasergewebe wurde in das unter Beispiel 1 beschriebene viskose Sol getaucht und nach kurzer Verweildauer zur vollständigen Benetzung langsam senkrecht herausgezogen. Das so benetzte Gewebe wurde zunächst frei hängend an der Luft aufbewahrt. Eine Vergelung des aufgetragenen Sols war dabei schon nach kurzer Zeit zu beobachten. Dieser Verfahrensschritt wurde im Anschluß mehrfach wiederholt (mind. 4x), um eine ausreichend starke Beschichtung zu erhalten. Hieran schloß sich der Trocknungsvorgang an. Die Trocknung des beschichteten Fasergewebes erfolgte vorzugsweise frei hängend nach folgendem Programm:

| Schritt | Temperatur /°C | Dauer /h | Druck /mbar |
|---|---|---|---|
| 1 | 40 | 2 | Normaldruck |
| 2 | 20 | 24 | 50 |
| 3 | 50 | 4 | <1 |
| 4 | 75 | 8 | <1 |
| 5 | 100 | 3 | <1 |
| 6 | 150 | 3 | <1 |
| 7 | 175 | 8 | <1 |
| 8 | 200 | 3 | <1 |
| 9 | 250 (bis 400 °C) | 3 | <1 |

Infiltration des beschichteten Fasergewebes mit einem Mullitprecursor:

### Bereitung des Mullitprecursors:

50 g (0,133 mol) Al(NO₃)₃9H₂O wurden in 50 mL Ethanol p.A. unter Rühren gelöst (Gemisch I). Zur gleichen Zeit wurden 0,17 g (0,044 mol) Tetraethoxysilan in 50mL Ethanol p.A. aufgenommen und homogenisiert (Gemisch II). Im Anschluß wurden die Gemische I und II vereinigt und das so gewonnene Sol unter Rühren 15 Minuten lang homogenisiert.

Die im Vorfeld hergestellten, beschichteten Fasergewebe wurden analog zum Dip-Coating-Verfahren senkrecht in das Sol eingetaucht und nach kurzer Verweildauer zur vollständigen Benetzung langsam wieder senkrecht herausgezogen. Das so benetzte Gewebe wurde zunächst frei hängend bei einer Umgebungstemperatur von 20 °C und bei einem Druck von < 50 mbar aufbewahrt. Eine Vergelung des aufgetragenen Sols war dabei schon nach kurzer Zeit zu beobachten. Dieser Verfahrensschritt wurde im Anschluß mehrfach wiederholt (bis zu 5x), um eine ausreichend starke Infiltration zu erreichen. Hieran schloß sich der Trocknungsvorgang an. Die Trocknung des infiltrierten Fasergewebes erfolgte vorzugsweise frei hängend nach folgendem Programm:

| Schritt | Temperatur /°C | Dauer /h | Druck /mbar |
|---|---|---|---|
| 1 | 40 | 0,5 | Normaldruck |
| 2 | 20 | 10 | 50 |
| 3 | 50 | 1 | <1 |
| 4 | 75 | 2 | <1 |
| 5 | 100 | 3 | <1 |
| 6 | 150 | 3 | <1 |
| 7 | 175 | 3 | <1 |
| 8 | 200 | 3 | <1 |

Sinterung des Verbundmaterials unter Heißpreßbedingungen:

Die nach dem oben geschilderten Verfahren präparierten Gewebe wurden bündig gestapelt und unter folgenden Heißpreßbedingungen gesintert:
Sintertemperatur: 1250 °C
Preßdruck: 10 MPa
Haltezeit bei 1250 °C: 30 min

### Eigenschaften der Verbundwerkstoffe:

- Bruchfestigkeit (y_{f}): 50 bis 200 MPa (je nach Sinterung und Fasergehalt)
- Stufenweiser, kontrollierter Bruch, der sich über eine Verformung von 80 µm bis 150 µm hinaus dehnt

### Beispiel 6:

### Beschichtung der Endlosfaserbündel

Endlosfaserbündel aus Endlosfasern mit einem Durchmesser um 12 µm, Nextel® 720 der Firma 3M, wurden mit Hilfe einer speziell entwickelten Beschichtungs-und Wickelapparatur in einem Arbeitsgang in die gewünschten neuartig beschichteten Fasern überführt.

Die vom Hersteller angelieferten Endlosfaserbündel wurden abgewickelt und durch einen Rohrofen geführt, dessen heißeste Zone 950 °C aufwies. In dieser Reaktionszone wurden die organischen Hilfsmittel, die die keramischen Endlosfasern herstellungsbedingt belegten, ohne Schädigung der Fasern rückstandslos entfernt. Bevor das Endlosfaserbündel das in den Beispielen 1 bis 4 beschriebene Beschichtungssol durchlief, wurde es durch eine besondere Fadenführung in einzelne, parallel zueinander laufende Endlosfasern aufgespreizt. Dies gewährleistete eine gleichmäßige Beschichtung der einzelnen Faserstränge. Nachdem die parallel zu einander ausgerichteten Endlosfasern das Beschichtungssol passiert hatten, wurden sie senkrecht nach oben geführt und wieder zu einem Bündel vereinigt. Die durchlaufende senkrechte Strecke betrug einen Meter und bewirkte durch das am Endlosfaserbündel zurücklaufende Beschichtungsmaterial eine zusätzliche Beschichtung. Überschüssiges Beschichtungsmaterial wurde am Ende der Wegstrecke durch einen Abstreifer entfernt und in das Vorratsgefäß des Beschichtungssols zurückgeführt. Anschließend passierte das Endlosfaserbündel eine kurze, zweistufige Trocknungszone (Temperaturen: 180 bzw. 130 °C) zur Entfernung des alkoholischen Lösemittels. Daran schloß sich die kontrollierte Aufwicklung des beschichteten Endlosfaserbündels an.

Die eigentliche Trocknung der beschichteten Endlosfasern erfolgte analog Beispiel 5, ebenso die Schmelzimprägnierung. Mit Abschluß dieses Aufbereitungsschrittes wurde das Endlosfaserbündel erneut bruchfrei abgewickelt und das Bündel oder auch alternativ nach einer problemlosen Auftrennung in einzelne Endlosfasem analog Beispiel 5 zu Verbundmaterialien weiterverarbeitet.

## Patentansprüche

1. Verfahren zu Beschichtung oxidischer Fasermaterialien mit Metallaluminaten, **dadurch gekennzeichnet, dass** man
a) das Fasermaterial **mit einem Faserdurchmesser von 5 bis 15 µm** mit einem Sol benetzt, das abgeleitet ist von
α) Verbindungen der Metalle der II. Hauptgruppe des Periodensystems, ausgenommen Magnesium, der III. Hauptgruppe des Periodensystems, ausgenommen Bor und/oder der III., IV., V. und/oder VI. Nebengruppe des Periodensystems, ausgenommen Y, einschließlich den Lanthaniden, ausgenommen Sm sowie
β) wenigstens einer Aluminiumverbindung,
b) das Fasermaterial von dem **überschüssigen** Sol trennt,
c) die Schritte a) und b) gegebenenfalls mehrfach wiederholt,
d) das Fasermaterial bei Temperaturen im Verlauf von mehreren Stunden bei Temperaturen bis 400 °C, insbesondere bei Drücken ≤ 5mbar trocknet und
e) das Fasermaterial nach Einbringung in die gewünschte Matrix einer Temperaturbehandlung im Bereich von mehr als 600°C unterwirft.

2. Verfahren nach Anspruch 1, **dadurch gekennzeichnet, dass** die Fasermaterialien ausgewählt sind aus Filamenten, Fasern, Endlosfasern, Faserbündeln, Vliesen, Gewirken und/oder Geweben.

3. Verfahren nach Anspruch 1, **dadurch gekennzeichnet, dass** man Oxidfasern auf oxidischer Basis, insbesondere Mullit/α-Al₂O₃-Basis beschichtet.

4. Verfahren nach Anspruch 1, **dadurch gekennzeichnet, dass** die Metalle ausgewählt sind aus Lanthan oder Cer.

5. Verfahren nach einem oder mehreren der Ansprüche 1 bis 4, **dadurch gekennzeichnet, dass** Metallverbindungen ausgewählt sind aus Nitraten, Acetaten, Oxalaten und/oder Acetylacetonaten.

6. Verfahren nach einem oder mehreren der Ansprüche 1 bis 5, **dadurch gekennzeichnet, dass** man Aluminiumverbindungen einsetzt, die ausgewählt sind aus Nitraten, Alkoholaten, Oxalaten und/oder Acetylacetonaten.

7. Verfahren nach einem oder mehreren der Ansprüche 1 bis 6, **dadurch gekennzeichnet, dass** man die Fasern mit Lanthanaluminat der Formel LaAl₁₁O₁₈ beschichtet.

8. Verfahren nach einem oder mehreren der Ansprüche 1 bis 7, **dadurch gekennzeichnet, dass** man das Fasermaterial im Vakuum unter Kristallwasserabscheidung, Nitratabscheidung, Kristallwasserverdampfung **sowie** Nitratverdampfung unter Abscheidung oder Verdampfung von Kohlenwasserstoffen oder Kohlenoxiden schmelzimprägniert.

9. Hochtemperaturfeste Fasermaterialien mit einer Beschichtung eines Aluminats, erhältlich nach einem Verfahren wie in einem oder mehreren der Ansprüche 1 bis 8 definiert.

## Claims

1. A process for coating oxidic fibrous materials with metal aluminates, **characterized in that**
a) the fibrous material having a fiber diameter of from 5 to 15 µm is wetted with a sol which is derived from
α) compounds of metals from group 2 of the Periodic Table, with the exception of magnesium, group 13 of the Periodic Table, with the exception of boron, and/or groups 3, 4, 5 and/or 6 of the Periodic Table, with the exception of Y, including the lanthanoids, with the exception of Sm, and
β) at least one aluminum compound;
b) the fibrous material is separated from the remaining sol;
c) steps a) and b) are optionally repeated several times;
d) the fibrous material is dried in the course of several hours at temperatures of up to 400 °C, especially at pressures of ≤ 5 mbar; and
e) after being introduced in the desired matrix, the fibrous material is subjected to treatment at a temperature in the range of more than 600 °C.

2. The process according to claim 1, **characterized in that** the fibrous materials are selected from filaments, fibers, continuous filaments, fiber bundles, nonwoven, knitted and/or woven fabrics.

3. The process according to claim 1, **characterized in that** oxide-based fibers, especially based on mullite/α-Al₂O₃, are coated.

4. The process according to claim 1, **characterized in that** the metals are selected from lanthanum or cerium.

5. The process according to one or more of claims 1 to 4, **characterized in that** the metal compounds are selected from nitrates, acetates, oxalates and/or acetylacetonates.

6. The process according to one or more of claims 1 to 5, **characterized in that** aluminum compounds selected from nitrates, alcoholates, oxalates and/or acetylacetonates are used.

7. The process according to one or more of claims 1 to 6, **characterized in that** the fibers are coated with lanthanum aluminate of the formula LaAl₁₁O₁₈.

8. The process according to one or more of claims 1 to 7, **characterized in that** the fibrous material is melt-impregnated under vacuum with crystal water separation, nitrate separation, crystal water evaporation and nitrate evaporation with separation or evaporation of hydrocarbons or carbon oxides.

9. High-temperature resistant fibrous materials bearing a coating of an aluminate, obtainable by a process as defined in one or more of claims 1 to 8.

## Revendications

1. Procédé pour revêtir d'aluminates métalliques des matériaux fibreux à base d'oxyde, **caractérisé en ce que**
a) on mouille le matériau fibreux, ayant un diamètre de fibres de 5 à 15 *µ*m, avec un sol qui dérive
α) de composés des métaux du II^{ème} groupe principal du tableau périodique, à l'exception du magnésium, du III^{ème} groupe principal du tableau périodique, à l'exception du bore, et/ou du III^{ème}, du IV^{ème}, du V^{ème} et/ou du VI^{ème} groupe secondaire du tableau périodique, à l'exception de Y, y compris les lanthanides, à l'exception de Sm, et
β) d'au moins un composé de l'aluminium,
b) on sépare du sol en excès le matériau fibreux,
c) on répète éventuellement plusieurs fois les étapes a) et b),
d) on sèche le matériau fibreux, en plusieurs heures, à des températures allant jusqu'à 400°C, en particulier sous des pressions inférieures ou égales à 5 mbar, et
e) après introduction dans la matrice souhaitée, on soumet le matériau fibreux à un traitement thermique dans la plage supérieure à 600°C.

2. Procédé selon la revendication 1, **caractérisé en ce que** les matériaux fibreux sont choisis parmi les filaments, les fibres, les fibres continues, les faisceaux de fibres, les non-tissés, les tricots et/ou les tissus.

3. Procédé selon la revendication 1, **caractérisé en ce qu'**on revêt des fibres d'oxyde à base d'oxyde, en particulier à base de mullite/α-Al₂O₃.

4. Procédé selon la revendication 1, **caractérisé en ce que** les métaux sont choisis parmi le lanthane et le cérium.

5. Procédé selon l'une ou plusieurs des revendications 1 à 4, **caractérisé en ce que** les composés métalliques sont choisis parmi les nitrates, les acétates, les oxalates et/ou les acétylacétonates.

6. Procédé selon l'une ou plusieurs des revendications 1 à 5, **caractérisé en ce qu'**on utilise des composés de l'aluminium qui sont choisis parmi les nitrates, les alcoolates, les oxalates et/ou les acétylacétonates.

7. Procédé selon l'une ou plusieurs des revendications 1 à 6, **caractérisé en ce qu'**on revêt les fibres d'aluminate de lanthane de formule LaAl₁₁O₁₈.

8. Procédé selon l'une ou plusieurs des revendications 1 à 7, **caractérisé en ce**, à l'état fondu, on imprègne le matériau fibreux, sous vide, avec séparation de l'eau de cristallisation, séparation du nitrate, évaporation de l'eau de cristallisation et évaporation du nitrate, avec séparation ou évaporation d'hydrocarbures ou d'oxydes de carbone.

9. Matériaux fibreux résistants aux hautes températures, portant un revêtement d'un aluminate, pouvant être obtenus par un procédé selon l'une ou plusieurs des revendications 1 à 8.
